# EUROPEAN PATENT APPLICATION

(11) **EP 1 058 381 A1**
(43) Date of publication of application: **06.12.2000**
(21) Application number: 99401323.3
(22) Date of filing: 01.06.1999
(51) Int. Cl.: H03G 3/20

(54) **Method for reception of access requests with dynamic range limited devices**

(71) Applicant: ALCATEL, 75008 Paris (FR)
(72) Inventor: Desblancs, Philippe, 75015 Paris (FR); Lejay, Frédéric, 75009 Paris (FR); Savelli, Patrick, 75012 Paris (FR)
(74) Representative: Smith, Bradford Lee

(57) **Abstract**

The invention provides a method for connecting a cordless telephony system mobile station on a fixed part in a wireless communication system; the mobile station sends successive access requests, and awaits an answer after at least two access requests. In a first embodiment, the fixed part listens to access requests, and when an access request (4) is received, sets a gain level according to the power of the received access request; the mobile station sends a subsequent access request (5) ; the subsequent access request may be received and decoded by the fixed part, since an appropriate gain level was set after the access request was received. In a second embodiment, the fixed part opens reception windows at different gains, so that it decodes one of the access requests.

The invention makes it possible in a cordless telephony system to use a reception chain having an input power range smaller than the power range of access requests.

## Description

The invention relates to the field of wireless communication systems, and more particularly to access requests for cordless telephony systems.

DECT (Digital European Cordless Telephony) is a norm for cordless telephony systems that is used currently for products proposed on the market.

CTS (Cordless Telephony System) is a norm in the GSM proposing cordless telephony services between a CTS MS (mobile station) and a CTS FP (fixed part). Under CTS, the CTS fixed part transmits regularly a CTS Beacon Channel (CTS BCH) which is used by the CTS mobile station for synchronising on the fixed part; the CTS mobile station then accesses the CTS fixed part by transmitting an access request in the form of a burst on a CTS Access Request Channel (CTS ARCH); when the burst is received by the CTS fixed part within its reception window - 14 frames every 52 frames in CTS FP idle mode -, the burst is decoded by the CTS fixed part and communication between the CTS mobile station and the CTS fixed part is established.

Under the CTS norm, the CTS fixed part should be able to receive and decode access requests on a power range around 100 dB : indeed, the power of the burst received by the CTS fixed part may vary according to the position of the mobile station. However, this power range is higher than the power range that may be found in usual devices, e.g. in GSM mobile station currently sold on the market; ensuring reception and decoding over 100 dB is therefore costly, and difficult. Generally speaking, the invention thus addresses the problem of detecting and decoding access requests over a given power range, using devices having a reception range lower than said given power range; such devices are thereafter called 'reception range limited devices'.

There exists a similar problem in the GSM norm for BTSs (Base Transmission Stations). Indeed, the base stations should be able to receive and decode access requests originating from mobile stations, over a wide range of power. The solution used for GSM BTSs is to replicate the reception channel, so that a BTS actually comprises a number of reception channels at different gain levels, for receiving and decoding access channels at different powers. This solution has the drawback of being costly; replicating the reception channels may be contemplated for GSM BTSs, which are used for a number of different mobile stations; however, a CTS fixed part is normally supposed to be used by one mobile station on a domestic basis, and the cost of a CTS fixed part should be lower than the cost of a base station.

The invention brings a solution to this problem. It allows using existing reception range limited devices for manufacturing a CTS fixed part. Thanks to the invention, the type of hardware used for GSM mobile stations may be used again for CTS fixed part, while complying with the requirement on power range for CTS access requests.

More specifically, the invention provides a method for connecting a mobile station on a fixed part in a wireless communication system, comprising :
- for the mobile station, sending at least two access requests, at predetermined relative time positions;
- for the fixed part, listening to access requests from the mobile station at different gain levels, and decoding at least one of said access requests for answering the mobile station.

In one embodiment of the invention, the mobile station sends two access requests.

In another embodiment of the invention, the mobile station sends access requests in successive frames.

Preferably, the mobile station sends identical access requests.

The access requests may be sent at the same power.

In one embodiment of the invention, the mobile station sends the first of said access requests in one of predetermined frames, e.g. in an even-numbered frame or in an odd-numbered frame.

In a first embodiment of the invention, the method comprises the steps of :
- for the fixed part, when an access request is received, setting a gain level according to the power of the received access request ;
- for the fixed part, receiving and decoding a subsequent access request.

In this case, the step of listening to access request may comprise :
- setting a first gain level and listening to access requests at said first gain level;
- switching to a second gain level, and listening to access requests at said second gain level.

The step of setting a gain level may thereafter comprise setting a gain level derived from the first gain level when an access request is received during said listening to access requests at said first gain level, and setting a gain level derived from the second gain level when an access request is received during said listening to access requests at said second gain level.

Preferably, said access request is not decoded by said fixed part.

According to a second embodiment of the invention, the method comprises, for the fixed part, the step of changing its gain level according to a predetermined scheme.

In this case, the gain level of the fixed part may be selected among a low gain level and a high gain level, and the fixed part may change its gain level every frame.

In all cases, the wireless telecommunication system may be a cordless telephony system.

The invention also proposes a fixed part for a wireless telecommunication system for receiving access requests from a mobile station over a given range, said fixed part having
- a reception chain adapted to receive and decode access requests over a limited power range smaller than said given power range ;
- adjustable gain means for adapting the power level of a received access request to said limited power range ;
   - gain control means for setting the gain of said adjustable gain means according to the power level of a received access request for receiving and decoding a subsequent access request.

The invention also proposes a fixed part for a wireless telecommunication system for receiving access requests from a mobile station over a given range, said fixed part having
- a reception chain adapted to receive and decode access requests over a limited power range smaller than said given power range ;
- adjustable gain means for adapting the power level of a received access request to said limited power range ;
- gain control means for setting the gain of said adjustable gain means according to a predetermined scheme.

In this case, the gain control means preferably set the gain of said adjustable gain means by changing the gain level of the fixed part to a low gain level or a high gain level, and the gain control means change the gain level every frame.

The fixed part of the invention may be used in a cordless telephony system.

Last, the invention proposes a mobile station for a wireless telecommunication system for sending access requests to a fixed part, comprising means for sending at least two access requests at predetermined relative time positions.

The mobile station may further comprise means for listening to an answer from the fixed part after said at least two access requests.

Preferably, the means for sending send two access requests, possibly in successive frames.

In one embodiment, the means for sending send identical access requests.

The means for sending may also send access requests at the same power.

In another embodiment, the means for sending send the first of said access requests in one of predetermined frames, e.g. in an even-numbered frame or in an odd-numbered frame.

A cordless telephony system embodying the invention will now be described, by way of non-limiting example only, and in reference to the drawings, where
- figure 1 shows a timing diagram of communication between a mobile station and a fixed part in a system according to the first embodiment of the invention;
- figure 2 shows an enlarged view of the frames in which the mobile station transmits access requests, and in which the fixed part receives the access requests;
- figure 3 shows a monitoring window of a fixed part according to an embodiment of the invention;
- figure 4 shows a diagram of power in a system according to the first embodiment of the invention ;
- figure 5 shows a schematic diagram of a fixed part according to the first embodiment of the invention.

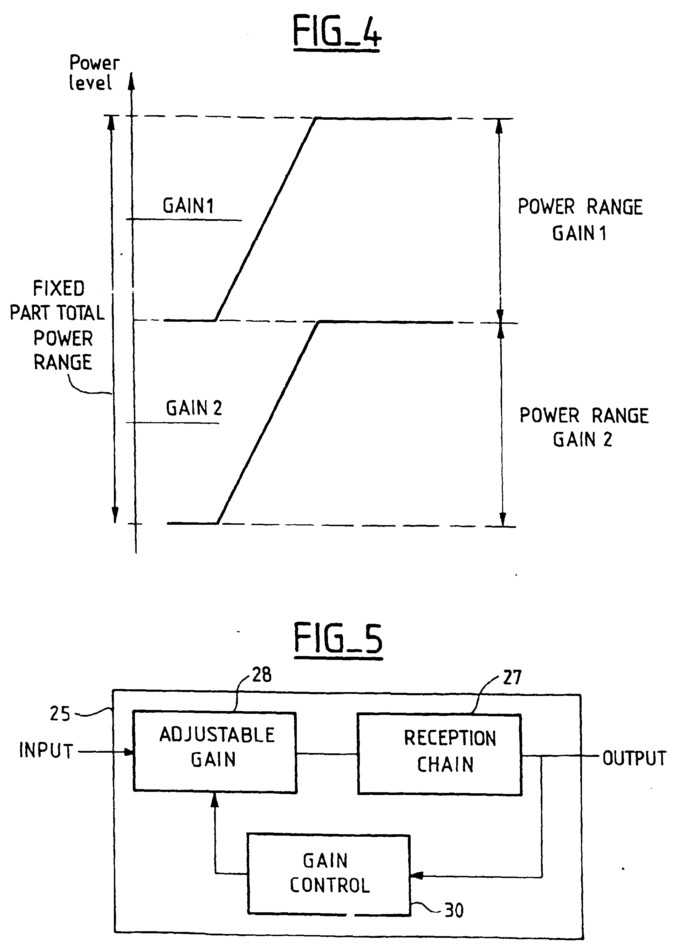

In the rest of the present description, the invention is described in reference to a CTS fixed part together with its mobile station; it should be noted that this is but an example of a system according to the invention; the invention may also be applied to other types of wireless communication systems, where a reception range limited device is used for receiving and decoding access requests on a power range larger than the reception range of the device. As shown on figure 5, the fixed part 25 may comprise a reception device or reception chain 27 able to receive and decode signals over a limited power range, and adjustable gain means 28 for adapting the power level of the received signals to the input of the reception chain; these adjustable gain means could comprise a front amplifier for amplifying the received signals so that they fall in the power range of the reception chain. In such case, there is a need to change the gain of the amplifier for properly decoding an access request transmitted by the mobile station.

The invention is based on the recognition that having the mobile station send several access requests may allow the fixed part to decode at least one of the access requests.

In a first embodiment, the invention takes advantage of the fact that a simple power measurement is easier and quicker to carry out than a complete decoding of an access request, and may be carried out on a broader range than a complete decoding of an access request. The invention thus proposes that the mobile station transmits several access requests; the first one, or the first ones are used by the fixed part for detecting the power level of the received signals; the fixed part may thus set its gain so as to be able to receive and decode subsequent access requests. In the preferred embodiment of the invention, the access request is simply duplicated; the first access request is detected and automatic gain control is carried out by the fixed part for being able to receive and decode the second access request. Figure 5 therefore shows with the reference sign 30 means for setting the gain of said adjustable gain means according to the power level of a received access request; this allows the fixed part to receive and decode a subsequent access request. It is assumed here that the access request(s) and the subsequent access request(s) are sent by the mobile station are sent at the same power; alternatively, there is a relationship between the power of the access request and the power of the subsequent access request, so that the fixed part may set its gain for decoding the subsequent access request, according to the measured power of the access request.

Thus, the fixed part, although the power range of its reception chain is limited, may receive and decode the access requests transmitted by the mobile station over the whole power range provided for access requests.

In a second embodiment, the fixed part opens reception windows at different gain levels, so that it may decode at least one of the access requests sent by the mobile station. It is in this case assumed that the access requests are sent at the same power, or approximately at the same power.

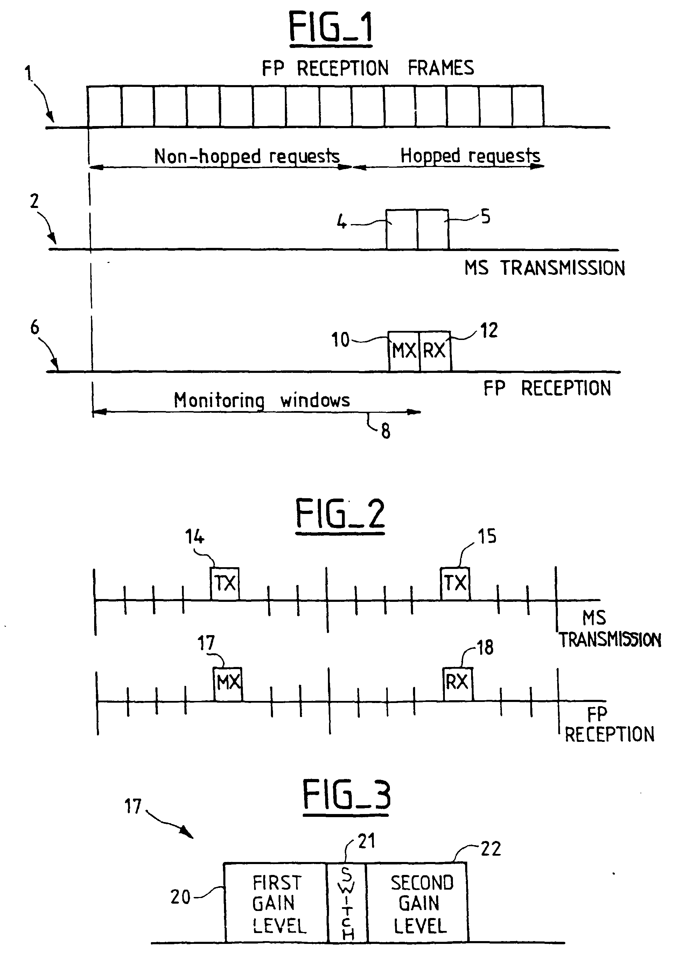

Figure 1 shows a timing diagram of communication between a mobile station and a fixed part in a system according to the first embodiment of the invention. The first line 1 shows the reception frames of the fixed part; as discussed above, when the fixed part is in idle mode, 14 frames every 52 frames are used for listening to incoming access requests. Under CTS, the first eight frames are used for non-hopped access requests, whereas the last six frames are used for receiving frequency hopped access requests.

The second line 2 shows the access requests transmitted by the mobile station; the mobile station transmits a first access request 4; in the example of figure 1, this access request is transmitted in the tenth frame of the reception window; the mobile station then transmits another access request; in the example of figure 1, the second access 5 request is transmitted in the eleventh frame of the reception window of the fixed part.

The third line 6 shows the reception by the fixed part. Figure 1 also shows the preferred embodiment explained in detail in reference to figure 3, where the fixed part opens monitoring windows and reception windows; until an access request is received, the fixed part opens monitoring windows, for detecting access requests. Once an access request is detected, the fixed part opens reception windows for receiving and decoding the following access request. Arrow 8 on figure 1 shows the frames in which monitoring windows are opened by the fixed part; these frames start with the first frame, and end at the tenth frame, where the first access request transmitted by the mobile station is received.

According to the first embodiment of the invention, the fixed part need not decode the first access request , but simply detects the first access request and measures the received power. This makes it possible for the fixed part to determine the gain level necessary for properly receiving and decoding a subsequent access request - in the example the second access request. Thus, during the tenth reception frame 10, the fixed part detects the first access request transmitted by the mobile station, and measures the power of the access request. An accurate measurement of the power of the access request is not necessary; it is sufficient that the fixed part assesses the power of the access requests so as to be able to set the gain for being able to decode subsequent access requests.

After the step of detecting the access request and measuring the power of the access request, the fixed part may adapt its gain for being able to receive and decode the second access request. The second access request is then received and decoded in the eleventh frame 12.

Figure 2 shows an enlarged view of the frames in which the mobile station transmits access requests, and in which the fixed part receives the access requests. In the example of figure 1, these frames are the tenth and eleventh frames of the reception windows. As shown on figure 2, each frame comprises eight time slots; in the tenth frame, the mobile station transmits its first access request 14 in the fifth slots; it transmits its second access request 15 in the same slot of the eleventh frame; the first access request is received by the fixed part in a monitoring window 17 in the fifth slot of the tenth frame, and the second access request is received by the fixed part in a receiving window 18 in the fifth slot of the eleventh frame.

Figure 2 exemplifies the fact that each of the frames of the reception window may comprise several slots; in the example of figure 2, the two access requests are transmitted by the mobile station in adjacent frames, and in the same slots of adjacent frames. This time position of the access requests in only provided as an example : the time between the access requests is preferably sufficient for allowing the fixed part to set the gain necessary for receiving and decoding the access request to be decoded; it is also advantageous that the access requests transmitted by the mobile station are close to each other; this increases the likelihood that all access requests are received in the reception window. It also increases the likelihood that the power level of all access requests is similar.

The fact that the access requests in the example of figure 2 are transmitted in the same time slot of the frame only makes it easier to implement the invention.

Figure 3 shows a monitoring window of a fixed part according to an embodiment of the invention; in this embodiment, the invention uses the fact that measuring power in order to adapt the gain of the fixed part may be carried out quicker than decoding an access request. Thus, the monitoring slot 17 is actually comprises of three parts; in the first part 20, the fixed part listens to access requests with a first gain level; in the second part 21, the fixed part switches its gain, so that it may in the third part of the monitoring slot listen to access requests with a second gain level. This makes it possible to listen to access requests over a power range that is twice as large as the reception range of the fixed part. The first and second part of the monitoring slot may each represent 4/9 of the total length of the slot, the switching of the gain level being carried out in 1/9 of the length of the slot.

In each of the first and third parts, the CTS fixed part listens to the access requests, and assesses the power of the access requests; more specifically, the fixed part listens to access requests in each of the first and third parts, and selects the appropriate gain level according to the signals received in the first and third parts : if an access request is received in the first part of the monitoring window, a gain level is derived from the first gain level for listening to subsequent access requests; if an access request is received in the third part of the monitoring window, a gain level is derived from the second gain level for listening to subsequent access requests. The CTS fixed part may also carry out a limited decoding of the access request, for instance for the purposes of correlating the second access request to the first access request.

Thus, the gain level used for listening to subsequent access requests and for decoding subsequent access request is derived from the power of the received access request, and from the gain level of the relevant part of the monitoring window. For instance, assume the access request is detected in the first part of the monitoring window, where the gain level is set at said first gain level ; if the received power is higher than a nominal power, the gain for listening to subsequent access requests should be lower than the first gain level. Otherwise, if the received power is lower than a nominal power, the gain for listening to subsequent access requests should be higher than the first gain level. This allows setting the gain for subsequent decoding, although the range of each of said parts of the monitoring window may not allow decoding. In the example of figure 4, the range of each part of the monitoring window is around 50 dB, while the range for subsequent decoding could be around 30 dB.

Figure 4 shows a diagram of power in a system according to the invention. The vertical axis represents the total range of power level of the access requests. In the CTS norm, as discussed, this range is a 100 dB range. In the example of figure 4, the fixed part is based on a reception limited device, and may only receive and decode signal over a range of power of 49 dB. Two levels of gain may be used. In the first gain level - gain 1 on figure 4 - the fixed part may receive and decode signals in a first power range, over approximately 50% of the total power range of the fixed part; in the second gain level - gain 2 on figure 4 - the fixed part may receive and decode signals in a second power range; again, this second power range represents approximately 50 % of the total power range.

For each gain level, figure 4 shows the gain level of the reception range limited device; the horizontal axis represents the power at the output of the reception device; at higher values, the device is saturated, and reception is impossible; at lower values, the power level is too small and reception is also impossible. Each setting of the gain allows an access request to be received over a power range around 49 dB, so that the total power range of 100 dB is covered with only two values of the gain.

The invention makes it possible, simply by repeating the access request, to use a reception range limited device for receiving and decoding access requests. The relative timing of the access requests was discussed above; the number of access requests is not limited to two access requests, as exemplified on figures 3 and 4. More than one access request may be necessary for the fixed part to detect an access request and determine the level of power for decoding subsequent access requests. In such a case, the mobile station may send more than two access requests; for instance, where the fixed part used a reception range limited device, with a power range of 25 % of the total power range of the access requests, two access requests may be used for determining the power range for proper decoding of a third access request; this assumes a monitoring window of the type of the one of figure 3 is used, whereby two different gain levels are tested each time an access request is received. More generally, the invention suggests sending at least one access request that is not necessarily decoded, but is detected and used by the fixed part for determining the gain level for decoding subsequent access requests. The number of these access requests is tailored according to the reception range of the hardware of the fixed part, and to the total possible power range of the access requests.

In the preferred embodiment of the invention discussed above, the first and second access requests are identical; this is however not compulsory for carrying out the invention; indeed, the first access request need not be fully decoded by the fixed part; the first access request - or the first access requests that need not be fully decoded - may have a format different from the one of the subsequent access request that will be decoded by the fixed part. The first access request(s) may thus simply have a format ensuring that it is (they are) recognised by the fixed part, and may comprise information necessary for correlation with a subsequent access request. The second access request - or the subsequent access request decoded by the fixed part - would then carry the information necessary for the fixed part to establish communication.

The invention makes it possible to use a reception chain having a limited reception range for a CTS fixed part; it may be carried out with very limited changes to the mobile station, it being only necessary to send two access requests, or more, instead of a single access request; on the side of the fixed part, the invention may simply be carried out using automatic gain control mechanisms that are known per se.

The invention ensures that the mobile station accesses the fixed part; according to the time position of the access requests sent by the mobile station, the mobile station may be denied access to the fixed part; this may be the case where both access requests fall out of the 14 frames reception window of the CTS fixed part; this may also be the case where only the second access request falls within the 14 frames reception window; it may then not be decoded. This is not likely to happen under CTS, where the mobile station is only allowed to transmit during these 14 frames. For other systems, the only drawback in this case is that the fixed part would not necessarily receive the second access request. If the first access request is received in the last frame of the reception window, it is still possible to extend the reception window, so as to receive subsequent access request(s). In any case, the likelihood that access is refused is not dramatically increased because several access requests are sent according to the invention.

The second embodiment of the invention is now described. In this embodiment, the fixed part systematically changes its gain at each reception window, so that it may receive and decode access requests in one of the reception window. For instance, assume the mobile station transmits two access requests, at the same or approximately the same power. Assume also that two gain levels are sufficient at the fixed part for covering the possible power range of received power requests. The fixed part would in this case opens every other reception window at a given power level - say a low power level -; the fixed part would opens the other reception window at another power level - say a high power level -.

Thus, in this second embodiment, there is no need to adapt the gain of the fixed part according to the power level of a received access request. On the contrary the gain level of the fixed part is set according to a predetermined scheme, so that it may decode at least one of the access requests sent by the mobile station. The simplest scheme is the one where the gain level is changed every frame ; other schemes are possible.

The second embodiment of the invention was exemplified above in case where two gain levels are sufficient for covering the possible power range of access requests. The invention may also be carried out where three gain levels are necessary for covering the possible power range; in this case, the mobile station could sent three access requests, and the fixed part could set different gain levels with a periodicity of three frames.

In both embodiments of the invention, the mobile station transmits several access requests - two in the preferred embodiment. The relative time position of the access requests are predetermined - they are in following frames in the preferred embodiment. Thus, in the first embodiment, the fixed part will know when to adapt its gain after detecting an access request; in the second embodiment, the fixed part would know which scheme to follow for setting its gain. The mobile station would thus comprise means for sending at least two access requests, in predetermined relative time positions.

Preferably, the mobile station awaits an answer from the fixed part after the access requests are sent; the mobile station would then comprise means for listening to an answer from the mobile station after said at least two access requests. As exemplified above, the means for sending may send two access requests, in successive frames; these access requests preferably have the same power.

The access requests may be sent on adjacent or successive frames, in the same multiframe. It is also possible to have the mobile stations sent the first of the access requests only in an odd or even-numbered frame. In case the mobile station sends two access requests, this avoids collisions between the first access request of one mobile, and the second access request of another mobile. This is especially interesting in the first embodiment of the invention : indeed, in case the transmission channel for the access request is noisy, there may be a risk that the noise is misinterpreted as being an access request. The gain level for subsequent access requests would then be set at a level derived from the noise level. If the fixed part were to receive a first access request with this wrongly estimated gain level, it may possibly fail to detect the first access request. On the contrary, if the timing of the first access request is fixed, even if the gain level is erroneously fixed, the fixed part will not miss any first access request.

The invention is not limited to the embodiments described in reference to the figures. Other means and methods may be used for determining the power of the access requests received by the fixed part. In the example of figure 3, two levels of gain are tested each time an access request is received; however, more gain levels could be tested at each access request, if the duration for each test is reduced.

The invention was described in its preferred embodiment to CTS. It also applies to other wireless communication system, where a mobile station accesses a fixed part.

## Claims

1. A method for connecting a mobile station on a fixed part in a wireless communication system, comprising :
- for the mobile station, sending at least two access requests (4, 5) at predetermined relative time positions ;
- for the fixed part, listening to access requests from the mobile station at different gain levels, and decoding at least one of said access requests for answering the mobile station.

2. The method of claim 1, wherein the mobile station sends two access requests.

3. The method of claim 1 or 2, wherein the mobile station sends access requests in successive frames.

4. The method of claim 1, 2, or 3, wherein the mobile station sends identical access requests.

5. The method of one of claims 1 to 4, wherein the mobile station sends access requests at the same power.

6. The method of one of claims 1 to 5, wherein the mobile station sends the first of said access requests in one of predetermined frames.

7. The method of claim 6, wherein the mobile station sends the first of said access requests in an even-numbered frame.

8. The method of claim 6, wherein the mobile station sends the first of said access requests in an odd-numbered frame.

9. The method of one of claims 1 to 8, further comprising the steps of :
- for the fixed part, when an access request (4, 14) is received, setting a gain level according to the power of the received access request ;
- for the fixed part, receiving and decoding a subsequent access request (5, 15).

10. The method of claim 9, wherein the step of listening to access request comprises :
- setting a first gain level and listening to access requests at said first gain level (20) ;
- switching (21) to a second gain level, and listening to access requests at said second gain level (22).

11. The method of claim 10, wherein the step of setting a gain level comprises setting a gain level derived from the first gain level when an access request is received during said listening to access requests at said first gain level, and setting a gain level derived from the second gain level when an access request is received during said listening to access requests at said second gain level.

12. The method of one of claims 9 to 11, wherein said access request is not decoded by said fixed part.

13. The method of one of claims 1 to 8, further comprising, for the fixed part, the step of changing its gain level according to a predetermined scheme.

14. The method of claim 13, wherein the gain level of the fixed part is selected among a low gain level and a high gain level, and wherein the fixed part changes its gain level every frame.

15. The method of one of claims 1 to 14, wherein said wireless telecommunication system is a cordless telephony system.

16. A fixed part for a wireless telecommunication system for receiving access requests from a mobile station over a given range, said fixed part having
- a reception chain (27) adapted to receive and decode access requests over a limited power range smaller than said given power range ;
- adjustable gain means (28) for adapting the power level of a received access request to said limited power range ;
- gain control means (30) for setting the gain of said adjustable gain means according to the power level of a received access request for receiving and decoding a subsequent access request.

17. A fixed part for a wireless telecommunication system for receiving access requests from a mobile station over a given range, said fixed part having
- a reception chain (27) adapted to receive and decode access requests over a limited power range smaller than said given power range ;
- adjustable gain means (28) for adapting the power level of a received access request to said limited power range ;
- gain control means (30) for setting the gain of said adjustable gain means according to a predetermined scheme.

18. The fixed part of claim 17, wherein the gain control means set the gain of said adjustable gain means by changing the gain level of the fixed part to a low gain level or a high gain level, and wherein said gain control means changes the gain level every frame.

19. The fixed part of claim 16, 17 or 18, wherein said wireless telecommunication system is a cordless telephony system.

20. A mobile station for a wireless telecommunication system for sending access requests to a fixed part, comprising means for sending at least two access requests (4, 5) at predetermined relative time positions.

21. A mobile station according to claim 20, further comprising means for listening to an answer from the fixed part after said at least two access requests.

22. The mobile station of claim 20 or 21, wherein the means for sending send two access requests.

23. The mobile station of claim 20, 21 or 22, wherein the means for sending send access requests in successive frames.

24. The mobile station of one of claims 20 to 23, wherein the means for sending send identical access requests.

25. The mobile station of one of claims 20 to 24, wherein the means for sending send access requests at the same power.

26. The mobile station of one of claims 20 to 25, wherein the means for sending send the first of said access requests in one of predetermined frames.

27. The mobile station of claim 26, wherein the means for sending send the first of said access requests in an even-numbered frame.

28. The mobile station of claim 26, wherein the means for sending send the first of said access requests in an odd-numbered frame.
